# FASCICULE DE BREVET EUROPEEN

(11) **EP 2 477 846 B1**
(45) Date de publication et mention de la délivrance du brevet: **02.04.2014**
(21) Numéro de dépôt: 10759604.1
(22) Date de dépôt: 15.09.2010
(51) Int. Cl.: B60R 13/00, E05B 1/00

(54) **POIGNEE D'OUVRANT DE VEHICULE AUTOMOBILE**
GRIFF FÜR EIN TÜRBLATT EINES KRAFTFAHRZEUGES
HANDLE FOR A DOOR LEAF OF A MOTOR VEHICLE

(30) Priorité: 18.09.2009 IT MI20091597
(43) Date de publication de la demande: 25.07.2012
(73) Titulaire: Valeo S.p.A., 10026 Santena (TO) (IT)
(72) Inventeur: SAVANT, Fiorenzo, I-10044 Pianezza (IT); GRAMAGLIA, Alberto, I-10044 Pianezza (IT)
(74) Mandataire: Croonenbroek, Thomas Jakob
(86) Numéro de dépôt international: PCT/EP2010/063533
(87) Numéro de publication internationale: WO 2011/032976

(56) Documents cités:
- DE-A1-102004 062 918
- US-A- 4 862 642
- US-A1- 2006 125 262
- US-A1- 2006 282 987
- US-A1- 2007 158 960

## Description

L'invention concerne une poignée d'un ouvrant de véhicule automobile et plus particulièrement une poignée externe.

De façon générale, une telle poignée est montée sur le panneau extérieur de l'ouvrant et comporte une partie fixe montée derrière le panneau extérieur et un levier de préhension mobile par rapport à la partie fixe. Ce levier de préhension est accessible depuis l'extérieur du véhicule et est destiné à être actionné par un utilisateur pour ouvrir le véhicule. Le document US 2006/0125262 A1 décrit une poignée de l'art antérieur.

Un tel levier de préhension peut donc être manipulé par l'utilisateur plusieurs fois par jour et doit par conséquent avoir une bonne tenue mécanique.

De plus, dans le domaine automobile, on doit répondre à une demande croissante de personnalisation du véhicule, de l'habitacle du véhicule à la carrosserie notamment des poignées externes, tout en gardant une standardisation pour maîtriser le coût de revient.

Une solution connue consiste à fixer une bande décorative sur le côté visible de la poignée, et en particulier sur le levier de préhension. Cette bande décorative est par exemple réalisée en acier inoxydable, en aluminium anodisé, ou encore en alliage chromé.

Toutefois la fixation d'une telle bande décorative n'est pas pérenne.

En effet, la bande décorative fixée sur le levier de préhension peut se détacher de la poignée à force de manipulation de la poignée par l'utilisateur ou encore de façon accidentelle lors du nettoyage du véhicule dans une station de lavage ou par un Jet d'eau à forte pression.

L'invention a donc pour objectif de proposer une telle poignée présentant des éléments décoratifs qui permet de palier cet inconvénient de l'art antérieur tout en assurant une bonne tenue mécanique de la poignée.

A cet effet, l'invention a pour objet une poignée d'ouvrant de véhicule automobile comportant une partie fixe montée sur le panneau extérieur dudit ouvrant, et un levier de préhension monté pivolant par rapport à la partie fixe et configuré pour être actionné par un utilisateur, caractérisée en ce que le levier de préhension comprend :
- une coque externe mobile en pivotement présentant :
   - une face avant visible par un utilisateur et une face arrière opposée à la face avant, et
   - un évidement ménagé dans ladite coque externe formant une ouverture dans la face avant visible de ladite coque externe,
- un insert de décoration fixé dans l'évidement et présentant une paroi avant affleurant sensiblement la face avant de ladite coque externe, une paroi arrière fixée à la face arrière de ladite coque externe, et au moins une nervure reliant lesdites parois avant et arrière de l'insert de décoration, lesdites parois avant et arrière et ladite nervure étant réalisées d'une seule pièce.

L'ensemble coque externe et insert de décoration ainsi assemblés, permettent de former une structure rigide du levier de préhension conférant une bonne tenue mécanique à la poignée et une grande fiabilité, tout en permettant de mettre en évidence des éléments décoratifs sur l'insert de décoration qui ne risquent pas de se détacher accidentellement de la poignée.

Ladite poignée peut en outre comporter une ou plusieurs caractéristiques suivantes, prises séparément ou en combinaison :
- ladite poignée comporte un cache verrou maintenu par la partie fixe et comprenant une coque externe fixe présentant une face avant visible par un utilisateur, une face arrière opposée à la face avant et un évidement ménagé dans ladite coque externe formant une ouverture dans la face avant visible de ladite coque externe, et un insert de décoration fixé dans l'évidement et présentant une paroi avant affleurant sensiblement la face avant de ladite coque externe, une paroi arrière fixée à la face arrière de ladite coque externe, et au moins une nervure reliant lesdites parois avant et arrière de l'insert de décoration, lesdites parois avant et arrière et ladite nervure étant réalisées d'une seule pièce,
- l'évidement est traversant et la paroi arrière de l'insert de décoration est sensiblement affleurante à la face arrière de ladite coque externe; on obtient ainsi à la fois une fixation solide de l'insert de décoration dans la coque externe et un toucher agréable pour l'utilisateur au niveau de l'arrière du levier de préhension lorsqu'il prend en main le levier de préhension,
- l'évidement est ménagé sensiblement au centre de ladite coque externe,
- ladite poignée comporte un moyen de clippage porté d'une part par ladite coque externe et d'autre part par l'insert de décoration pour solidariser ladite coque externe et l'insert de décoration; la coque externe et l'insert de décoration sont alors solidarisés de façon simple et fiable,
- ladite poignée comporte un moyen de fixation supplémentaire de ladite coque externe et de l'insert de décoration, tel qu'un moyen de fixation par collage ou par vissage; cette fixation-supplémentaire permet d'augmenter la fiabilité et la tenue mécanique du levier de préhension,
- l'insert de décoration est configuré pour être réalisé dans un matériau différent de ladite coque externe, par exemple un matériau adapté à une finition souhaitée comme un revêtement en chrome,
- la paroi avant de l'insert de décoration est configurée pour recevoir un traitement de finition, ce qui permet par exemple de mettre en évidence un aspect solide et raffiné,
- ledit traitement de finition est choisi parmi le chromage, le grenage ou la peinture,
- la paroi avant de l'insert de décoration présente une taille réduite par rapport à la paroi arrière pour un montage par l'arrière de l'insert de décoration dans ladite coque externe; la fixation de la coque externe et de l'insert de décoration se fait donc à l'arrière du levier de préhension de sorte qu'un jet d'eau trop puissant ne puisse pas au contact avec la face avant du levier de préhension déloger l'insert de décoration,
- ladite poignée comporte des composants électroniques portés par l'insert de décoration et logés entre les parois avant et arrière de l'insert de décoration; en effet l'insert de décoration selon au moins une des caractéristiques précédentes est intégré dans la coque externe et fixé de façon fiable, sans empêcher la mise en place dans le levier de préhension de composants électroniques qui augment le confort d'utilisation de l'utilisateur.

D'autres caractéristiques et avantages de l'invention ressortiront de la description suivante, donnée à titre d'exemple, sans caractère limitatif, en regard des dessins annexés parmi lesquels :
- la figure 1 est une vue de face d'une poignée selon l'invention, et
- la figure 2 est une vue en coupe transversale de la poignée, selon l'axe 1-1 de la figure 1.

Dans ces figures, les éléments identiques portent les mêmes références.

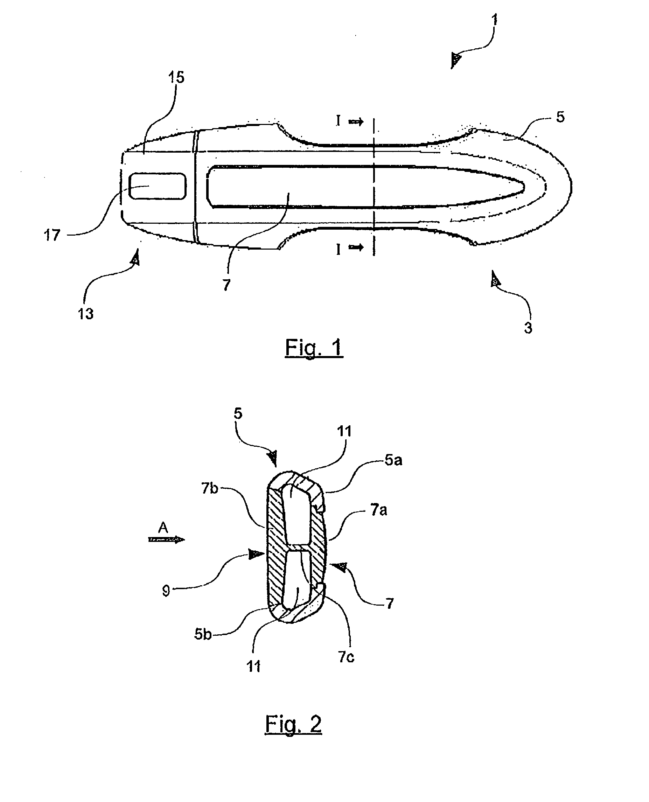

On a représenté sur la figure 1 une vue de face d'une poignée 1 externe d'un ouvrant de véhicule automobile (non représenté) tel qu'une porte latérale.

La poignée 1 comporte un levier de préhension 3 monté sur le panneau extérieur de l'ouvrant et donc accessible depuis l'extérieur du véhicule et sur laquelle un utilisateur tire vers l'extérieur pour ouvrir l'ouvrant.

Ce levier 3 est relié à une partie fixe (non représentée), également appelée socle ou support de poignée qui est destinée à être montée à l'intérieur de l'ouvrant, plus précisément entre le panneau extérieur et le panneau intérieur de l'ouvrant; cette partie fixe n'est donc pas visible une fois montée sur le véhicule.

La poignée 1 représentée ici est une poignée de type "Frigo" et le levier de préhension 3 est mobile en rotation par rapport à la partie fixe de la poignée et peut pivoter entre une position de repos et une position de commande pour l'ouverture d'une serrure de l'ouvrant, lorsque l'utilisateur tire sur ce levier de préhension 3.

En outre, le levier de préhension 3 comporte une coque externe 5 et un insert de décoration 7 intégré dans la coque externe 5 et fixé à la coque externe 5.

Plus précisément, la coque externe 5 est mobile en pivotement pour permettre à l'utilisateur de faire pivoter le levier de préhension 3 tel que précisé ci-dessus.

En se référant également à la figure 2, on constate que la coque externe 5 présente une face avant 5a visible par l'utilisateur et une face arrière 5b opposée à la face avant 5a.

Cette coque externe 5 présente un évidement 9 qui forme une ouverture dans la face avant 5a de la coque externe 5.

L'évidement 9 peut être traversant comme l'illustre la figure 2, dans ce cas il forme également une ouverture dans la face arrière 5b de la coque externe 5.

Selon le monde de réalisation représenté sur la figure 1, l'évidement 9 est ménagé sensiblement au centre de la coque externe 5.

L'insert de décoration 7 comporte une paroi avant 7a, une paroi arrière 7b et une nervure 7c reliant les parois avant 7a et arrière 7b. On pourrait prévoir plusieurs nervures 7c entre les parois avant 7a et arrière 7b pour renforcer encore la tenue mécanique.

La paroi avant 7a, la paroi arrière 7b et la nervure 7c sont formées d'une seule pièce.

Dans l'exemple illustré, l'insert 7 présente une section transversale de forme générale en « H », les branches latérales étant formées par les parois avant 7a et arrière 7b, et la branche transversale par la nervure 7c.

Cet insert 7 est monté dans l'évidement 9. Selon le mode de réalisation décrit, l'évidement 9 est traversant et l'insert de décoration 7 est monté par l'arrière comme l'indique la flèche A. Pour cela, la paroi avant 7a présente une taille réduite par rapport à la paroi arrière 7b.

L'insert de décoration 7 est donc inséré dans la coque externe 5 via l'orifice de l'évidement 9 formé sur la face arrière 5b de la coque externe 5 jusqu'à ce que la paroi avant 7a de l'insert de décoration 7 affleure sensiblement la face avant 5a de la coque externe 5. Dans l'exemple illustré, la paroi arrière 7b est également affleurante à la face arrière 5b de la coque externe 5. Les extrémités de la paroi avant 7a sont reliées par la coque externe 5 aux extrémités de la paroi arrière 7b situées sensiblement en face, de sorte que le levier de préhension 3 présente une section transversale de forme générale sensiblement en « 8 ».

La paroi avant 7a est donc visible depuis l'extérieur du véhicule.

C'est donc sur cette paroi avant 7a de l'insert de décoration 7 qu'une décoration est prévue, comme un logo, un symbole décoratif ou toute représentation graphique, ou encore une finition différente par rapport à la coque externe 5. Dans ce dernier cas, l'insert de décoration 7 peut être réalisé dans un matériau différent par rapport à la coque externe 5, ce matériau permettant de réaliser le traitement de finition souhaité. On peut prévoir par exemple une peinture, un chromage ou encore un grenage pour la finition de la paroi avant 7a de l'insert de décoration 7.

À titre d'exemple, la coque externe 5 peut donc être peinte ou encore grainée, tandis que la paroi avant 7a de l'insert de décoration 7 présente un revêtement chromé. Toute autre variante dans laquelle une finition particulière ou un élément décoratif est mis en évidence sur la paroi avant 7a de l'insert de décoration 7 est envisageable.

Par ailleurs, le maintien de l'insert 7 dans la coque externe 5 est assuré par une fixation de la paroi arrière 7b à la face arrière 5b de la coque externe 5, par exemple par clippage. Dans ce cas, on peut prévoir que la paroi arrière 7b de l'insert de décoration 7 porte des premières nervures de clippage qui coopèrent avec des secondes nervures de clippage complémentaires portées par la face arrière 5b de la coque externe 5. Bien entendu tout autre moyen de fixation peut être prévu.

Afin de renforcer la fixation entre la coque externe 5 et l'insert de décoration 7, on peut prévoir un moyen de fixation supplémentaire. À titre d'exemple, on peut interposer de la colle entre la face arrière 5b de la coque externe 5 et la paroi arrière 7b de l'insert de décoration 7, ou encore visser la face arrière 5b et la paroi arrière 7b entre elles.

L'insert 7 fait donc partie de la structure du levier de préhension 3 et peut porter des composants électroniques de la poignée 1. On peut citer en exemple un micro-interrupteur, des capteurs de présence ou proximité, ou encore une source de lumière pour éclairer la poignée et/ou le sol devant le véhicule. Ces composants électroniques sont alors logés dans les orifices 11 entre les parois avant 7a et arrière 7b de l'insert 7 de décoration.

Par ailleurs, en se référant à nouveau à la figure 1, la poignée 1 peut présenter un cache-verrou 13 porté par la partie fixe de la poignée. Ce cache-verrou 13 est donc fixe et peut comporter un logement pour un verrou destiné à empêcher l'actionnement de la serrure.

Ce cache-verrou 13 peut également comprendre une coque externe 15 et un insert de décoration 17 similaires à la coque externe 5 et à l'insert de décoration 7 du levier de préhension 3.

La poignée 1 ainsi formée permet de mettre en évidence des éléments décoratifs sur la paroi avant de l'insert de décoration 7,17 intégré de façon fiable dans la coque externe 5,15, tout en présentant une tenue mécanique renforcée.

On peut ainsi concevoir facilement différentes versions de poignées selon les finitions ou décorations, par exemple suivant le modèle ou la catégorie du véhicule.

En outre, la quantité d'outils pour réaliser les différentes versions de finition pour les poignées est diminuée, ce qui permet de réduire le coût de production de la poignée.

## Revendications

1. Poignée d'ouvrant de véhicule automobile comportant une partie fixe montée sur le panneau extérieur dudit ouvrant, et un levier de préhension (3) monté pivotant par rapport à la partie fixe et configuré pour être actionné par un utilisateur, **caractérisée en ce que** le levier de préhension (3) comprend :
- une coque externe (5) mobile en pivotement présentant :
• une face avant (5a) visible par un utilisateur et une face arrière (5b) opposée à la face avant (5a), et
• un évidement (9) ménagé dans ladite coque externe (5) formant une ouverture dans la face avant (5a) visible de ladite coque externe (5),
- un insert de décoration (7) fixé dans l'évidement (9) et présentant :
• une paroi avant (7a) affleurant sensiblement la face avant (5a) de ladite coque externe (5),
• une paroi arrière (7b) fixée à la face arrière (5b) de ladite coque externe (5), et
• au moins une nervure (7c) reliant lesdites parois avant (7a) et arrière (7b) de l'insert de décoration,
lesdites parois avant (7a) et arrière (7b) et ladite nervure (7c) étant réalisées d'une seule pièce.

2. Poignée selon la revendication 1, **caractérisée en ce qu'**elle comporte un cache-verrou (13) maintenu par la partie fixe et comprenant :
- une coque externe ( 15) fixe présentant :
• une face avant visible par un utilisateur et une face arrière opposée à la face avant, et
• un évidement ménagé dans ladite coque externe formant une ouverture dans la face avant visible de ladite coque externe,
- un insert de décoration (17) fixé dans l'évidement et présentant :
• une paroi avant affleurant sensiblement la face avant de ladite coque externe,
• une paroi arrière fixée à la face arrière de ladite coque externe, et
• au moins une nervure reliant lesdites parois avant et arrière de l'insert de décoration,
lesdites parois avant et arrière et ladite nervure étant réalisées d'une seule pièce.

3. Poignée selon l'une des revendications 1 ou 2, **caractérisée en ce que** ledit évidement (9) est traversant et **en ce que** la paroi arrière (7b) de l'insert de décoration (7,17) est sensiblement affleurante à la face arrière (5b) de ladite coque externe (5,15).

4. Poignée selon l'une quelconque des revendications précédentes, **caractérisée en ce que** l'évidement (9) est ménagé sensiblement au centre de ladite coque externe (5,15).

5. Poignée selon l'une quelconque des revendications précédentes, **caractérisé en ce que** ladite poignée comporte un moyen de clippage porté d'une part par ladite coque externe (5,15) et d'autre part par l'insert de décoration (7,17) pour solidariser ladite coque externe (5,15) et l'insert de décoration (7,17).

6. Poignée selon l'une quelconque des revendications précédentes, **caractérisée en ce que** ladite poignée comporte un moyen de fixation supplémentaire de ladite coque externe (5,15) et de l'insert de décoration (7,17), tel qu'un moyen de fixation par collage ou par vissage.

7. Poignée selon l'une quelconque des revendications précédentes, **caractérisée en ce que** l'insert de décoration (7,17) est configurée pour être réalisée dans un matériau différent de ladite coque externe (5,15).

8. Poignée selon l'une quelconque des revendications précédentes, **caractérisée en ce que** la paroi avant (7a) de l'insert de décoration (7,17) est configurée pour recevoir un traitement de finition.

9. Poignée selon la revendication 8, **caractérisée en ce que** ledit traitement de finition est choisi parmi le chromage, le grenage ou la peinture.

10. Poignée selon l'une quelconque des revendications précédentes, **caractérisée en ce que** la paroi avant (7a) de l'insert de décoration (7,17) présente une taille réduite par rapport à la paroi arrière (7b) pour un montage par l'arrière de l'insert de décoration (7,17) dans ladite coque externe (5,15).

11. Poignée selon l'une quelconque des revendications précédentes, **caractérisé en ce que** ladite poignée comporte des composants électroniques portés par l'insert de décoration (7,17) et logés entre les parois avant (7a) et arrière (7b) de l'insert de décoration (7,17).

## Patentansprüche

1. Griff für eine Tür eines Kraftfahrzeugs, der einen stationären Teil aufweist, der auf die äußere Platte der Tür montiert ist, und einen Greifhebel (3), der in Bezug zu dem stationären Teil schwenkend montiert und dazu konfiguriert ist, von einem Benutzer betätigt zu werden, **dadurch gekennzeichnet, dass** der Greifhebel (3) Folgendes aufweist:
- eine unter Schwenken bewegliche äußere Schale (5), die Folgendes aufweist:
• eine Vorderseite (5a), die für einen Benutzer sichtbar ist, und eine Rückseite (5b), die der Vorderseite (5a) gegenüber liegt, und
• eine Aussparung (9), die in der äußeren Schale (5) eingerichtet ist, die eine Öffnung in der sichtbaren Vorderseite (5a) der äußeren Schale (5) bildet,
- einen Dekoreinsatz (7), der in der Aussparung (9) befestigt ist und Folgendes aufweist:
• eine Vorderwand (7a), die im Wesentlichen mit der Vorderseite (5a) der äußeren Schale (5) bündig ist,
• eine Rückwand (7b), die an der Rückseite (5b) der äußeren Schale (5) befestigt ist, und
• mindestens eine Rippe (7c), die die Vorderwand (7a) und die Rückwand (7b) des Dekoreinsatzes verbindet,
wobei die Vorderwand (7a) und die Rückwand (7b) sowie die Rippe (7c) aus einem einzigen Teil hergestellt sind.

2. Griff nach Anspruch 1, **dadurch gekennzeichnet, dass** er eine Schlossabdeckung (13) aufweist, die von dem stationären Teil gehalten wird und Folgendes aufweist:
- eine stationäre äußere Schale (15), die Folgendes aufweist:
• eine Vorderseite, die für einen Benutzer sichtbar ist, und eine Rückseite, die der Vorderseite gegenüber liegt, und
• eine Aussparung, die in der äußeren Schale ausgebildet ist und eine Öffnung in der sichtbaren Vorderseite der äußeren Schale bildet,
- einen Dekoreinsatz (17), der in der Aussparung befestigt ist und Folgendes aufweist:
• eine Vorderwand, die mit der Vorderseite der äußeren Schale im Wesentlichen bündig ist,
• eine Rückwand, die an der Rückseite der äußeren Schale befestigt ist, und
• mindestens eine Rippe, die die Vorderwand und die Rückwand des Dekoreinsatzes verbindet,
wobei die Vorderwand und die Rückwand sowie die Rippe aus einem einzigen Teil hergestellt sind.

3. Griff nach einem der Ansprüche 1 oder 2, **dadurch gekennzeichnet, dass** die Aussparung (9) durchgehend ist und dass die Rückwand (7b) des Dekoreinsatzes (7, 17) im Wesentlichen mit der Rückseite (5b) der äußeren Schale (5, 15) bündig ist.

4. Griff nach einem der vorhergehenden Ansprüche, **dadurch gekennzeichnet, dass** die Aussparung (9) im Wesentlichen in der Mitte der äußeren Schale (5, 15) eingerichtet ist.

5. Griff nach einem der vorhergehenden Ansprüche, **dadurch gekennzeichnet, dass** der Griff ein Clipsmittel aufweist, das einerseits Teil der äußeren Schale (5, 15) und andererseits von dem Dekoreinsatz (7, 17) getragen wird, um die äußere Schale (5, 15) und den Dekoreinsatz (7, 17) fest zu verbinden.

6. Griff nach einem der vorhergehenden Ansprüche, **dadurch gekennzeichnet, dass** der Griff ein zusätzliches Mittel zum Befestigen der äußeren Schale (5, 15) und des Dekoreinsatzes (7, 17), wie zum Beispiel ein Befestigungsmittel durch Kleben oder durch Schrauben, aufweist.

7. Griff nach einem der vorhergehenden Ansprüche, **dadurch gekennzeichnet, dass** der Dekoreinsatz (7, 17) dazu konfiguriert ist, aus einem anderen Werkstoff hergestellt zu sein als die äußere Schale (5, 15).

8. Griff nach einem der vorhergehenden Ansprüche, **dadurch gekennzeichnet, dass** die Vorderwand (7a) des Dekoreinsatzes (7, 17) dazu konfiguriert ist, eine Endfertigungsbehandlung zu erhalten.

9. Griff nach Anspruch 8, **dadurch gekennzeichnet, dass** die Endfertigungsbehandlung aus Chromieren, Körnen oder Anstreichen ausgewählt ist.

10. Griff nach einem der vorhergehenden Ansprüche, **dadurch gekennzeichnet, dass** die Vorderwand (7a) des Dekoreinsatzes (7, 17) eine verringerte Größe im Vergleich zu der Rückwand (7b) für eine Montage von der Rückseite des Dekoreinsatzes (7, 17) in die äußere Schale (5, 15) aufweist.

11. Griff nach einem der vorhergehenden Ansprüche, **dadurch gekennzeichnet, dass** der Griff elektronische Bauteile aufweist, die von dem Dekoreinsatz (7, 17) getragen werden und zwischen der Vorderwand (7a) und der Rückwand (7b) des Dekoreinsatzes (7, 17) untergebracht sind.

## Claims

1. Handle for a motor vehicle opening element comprising a fixed portion mounted on the outer panel of said opening element, and a gripping lever (3) mounted so as to pivot relative to the fixed portion and configured in order to be actuated by a user, **characterized in that** the gripping lever (3) comprises:
- an outer shell (5) that can move pivotingly having:
• a front face (5a) that can be seen by a user and a rear face (5b) opposite to the front face (5a), and
• a recess (9) arranged in said outer shell (5) forming an opening in the visible front face (5a) of said outer shell (5),
- a decorative insert (7) fixed in the recess (9) and having:
• a front wall (7a) substantially flush with the front face (5a) of said outer shell (5),
• a rear wall (7b) fixed to the rear face (5b) of said outer shell (5), and
• at least one rib (7c) linking said front wall (7a) and rear wall (7b) of the decorative insert,
said front wall (7a) and rear wall (7b) and said rib (7c) being made in one piece.

2. Handle according to Claim 1, **characterized in that** it comprises a lock cover plate (13) held by the fixed portion and comprising:
- a fixed outer shell (15) having:
• a front face that can be seen by a user and a rear face opposite to the front face, and
• a recess arranged in said outer shell forming an opening in the visible front face of said outer shell,
- a decorative insert (17) fixed in the recess and having:
• a front wall substantially flush with the front face of said outer shell,
• a rear wall fixed to the rear face of said outer shell, and
• at least one rib linking said front and rear walls of the decorative insert,
said front and rear walls and said rib being made in one piece.

3. Handle according to either of Claims 1 and 2, **characterized in that** said recess (9) is a through-recess and **in that** the rear wall (7b) of the decorative insert (7, 17) is substantially flush with the rear face (5b) of said outer shell (5, 15).

4. Handle according to any one of the preceding claims, **characterized in that** the recess (9) is arranged substantially in the center of said outer shell (5, 15).

5. Handle according to any one of the preceding claims, **characterized in that** said handle comprises a clipping means supported on the one hand by said outer shell (5, 15) and on the other hand by the decorative insert (7, 17) in order to secure said outer shell (5, 15) and the decorative insert (7, 17).

6. Handle according to any one of the preceding claims, **characterized in that** said handle comprises an additional means for fixing said outer shell (5, 15) and the decorative insert (7, 17), such as a fixing means by bonding or by screwing.

7. Handle according to any one of the preceding claims, **characterized in that** the decorative insert (7, 17) is configured to be made in a material that is different than said outer shell (5, 15).

8. Handle according to any one of the preceding claims, **characterized in that** the front wall (7a) of the decorative insert (7, 17) is configured to receive a finishing treatment.

9. Handle according to Claim 8, **characterized in that** said finishing treatment is chosen from chrome-plating, graining or painting.

10. Handle according to any one of the preceding claims, **characterized in that** the front wall (7a) of the decorative insert (7, 17) has a reduced size relative to the rear wall (7b) for the decorative insert (7, 17) to be mounted in said outer shell (5, 15) from the rear.

11. Handle according to any one of the preceding claims, **characterized in that** said handle comprises electronic components supported by the decorative insert (7, 17) and housed between the front wall (7a) and rear wall (7b) of the decorative insert (7, 17).
